# EUROPEAN PATENT SPECIFICATION

(11) **EP 1 392 772 B1**
(45) Date of publication and mention of the grant of the patent: **25.07.2007**
(21) Application number: 02728164.1
(22) Date of filing: 27.05.2002
(51) Int. Cl.: C08L 83/04, C09D 183/04

(54) **SILICONE COMPOSITION FOR WATER-REPELLENT COATING**
SILIKONZUSAMMENSETZUNG FÜR EINEN WASSERABWEISENDEN ÜBERZUG
COMPOSITION SILICONE POUR ENDUIT IMPERMEABILISANT

(30) Priority: 30.05.2001 JP 2001162086
(43) Date of publication of application: 03.03.2004
(73) Proprietor: Dow Corning Toray Co., Ltd., Tokyo (JP)
(72) Inventor: KOBAYASHI, Hideki, Ichihara-shi, Chiba 299-0108 (JP); SASAKI, Motoshi, Ichihara-shi, Chiba 299-0108 (JP)
(74) Representative: Kyle, Diana
(86) International application number: PCT/JP2002/005130
(87) International publication number: WO 2002/098983

(56) References cited:
- EP-A- 0 273 867
- EP-A- 0 657 517
- PATENT ABSTRACTS OF JAPAN vol. 1998, no. 01, 30 January 1998 (1998-01-30) & JP 09 255941 A (NIPPON SHEET GLASS CO LTD;SHIN ETSU CHEM CO LTD), 30 September 1997 (1997-09-30) cited in the application

## Description

### Technical Field

The present invention relates to a silicone composition for a water-repellent coating, and more particularly to a silicone composition for a water-repellent coating capable of forming a soft water-repellent film when cured for a short time at a low temperature.

### Background Art

In conventional practice, silicone compositions are used as treatment agents that give the surfaces of various substrates water repellency or water resistance. Known examples include silicone resin compositions and compositions primarily containing alkylalkoxysilanes. For example, Japanese Patent Application Publication(Kokai) No.Hei 9-255941 discloses a water repellency treatment agent containing a fluoroalkylsilane. In addition, Japanese Patent Application Publication(Kokai) No.Hei 11-21508 discloses a coating agent composed of a hydrolyzable silicone resin, a phenylsilane, a partial hydrolysate of alkoxysilane, and a tin catalyst. However, such surface treatment agents are disadvantageous in that they have inadequate water repellency and take long to cure, and thus need additional improvement.

Specifically, it is an object of the present invention to provide a silicone composition for a water-repellent coating capable of forming a soft water-repellent film when cured for a short time at a low temperature.

### Disclosure of Invention

A silicone composition for a water-repellent coating comprising
(A) 100 weight parts of a polydimethylsiloxane described by general formula

   (RO)₃Si-Q-{(CH₃)₂SiO}ₙ-(CH₃)₂Si-Q-Si(OR)₃ ,

   where R is a C₁ to C₁₀ monovalent hydrocarbon group, Q is an oxygen atom or a C₂ to C₁₀ alkylene group, and n is an integer from 10 to 1000;
(B) 5 to 100 weight parts of a partial hydrolysate/condensate of alkoxysilane, wherein the alkoxysilane has a general formula

   R¹ₓSi(OR²)₄₋ₓ,

   where R¹ is a C₁ to C₆ monovalent hydrocarbon group, R² is a C₁ to C₆ alkyl group, and x is an integer from 0 to 3;
(C) 0.1 to 10 weight parts of an organotitanium-based catalyst;
(D) 50 to 900 weight parts of an aliphatic hydrocarbon solvent or ester-based solvent; and
(E) 0.1 to 100 weight parts of an alcohol-based solvent.

The present invention will now be described in detail. The polydimethylsiloxane of component (A) is described by general formula
(RO)₃Si-Q-{(CH₃)₂SiO}ₙ-(CH₃)₂Si-Q-Si(OR)₃. In this formula, R is a C₁ to C₁₀ monovalent hydrocarbon group such as methyl, ethyl, propyl, or other alkyl. Of these, methyl and ethyl are preferred. Q is an oxygen atom or a C₂ to C₁₀ alkylene group. Examples of alkylene groups include ethylene, propylene, butylene, and hexylene. In the formula, n is an integer from 10 to 1000, preferably 100 to 800, and ideally 300 to 700. Component (A) can be readily produced by a conventionally known method. When Q in the above general formula is an oxygen atom, the component may, for example, be synthesized by condensing a tetraalkoxysilane and a silanol-blocked polydimethylsiloxane in the presence or absence of a catalyst. The reaction ratio thereof, expressed as the tetraalkoxysilane/silanol group molar ratio, should preferably be 5 to 15. According to another possible method, a trialkoxychlorosilane and a silanol-blocked polydimethylsiloxane are condensed in the presence of a pyridine or other hydrogen halide receptor. When the Q in the above general formula is an alkylene group, the component may be produced by a method in which a trialkoxysilane and an alkenyl-blocked polydimethylsiloxane are hydrosilated in the presence of a platinum catalyst, or a method in which an alkenyltrialkoxysilane and an SiH-blocked polydimethylsiloxane are hydrosilated in the presence of a platinum catalyst.

Component (B) is a partial hydrolysate/condensate of alkoxysilane, wherein the alkoxysilane has a general formula R¹ₓSi(OR²)₄₋ₓ. In this formula, R¹ is a C₁ to C₆ monovalent hydrocarbon group such as methyl, ethyl, propyl, or other alkyl group; vinyl, allyl, 5-hexenyl, or other alkenyl group; or phenyl or other aryl group, of which methyl is preferred. R² is a C₁ to C₆ alkyl group such as methyl, ethyl, or propyl, of which methyl and ethyl are preferred. In the formula, x is an integer from 0 to 3, and preferably 1 or 0. Examples of alkoxysilanes suitable for component (B) include dimethyldimethoxysilane, dimethyldiethoxysilane, methyltrimethoxysilane, methyltriethoxysilane, methyltriisopropoxysilane, ethyltrimethoxysilane, ethyltriethoxysilane, tetramethoxysilane, tetraethoxysilane, and tetraisopropoxysilane. These compounds can be used singly or as mixtures of two or more components. Component (B) may be prepared by adding water to such an alkoxysilane to achieve partial hydrolysis/condensation, and the resulting partial hydrolysate/condensate should preferably contain alkoxy groups in an amount at which the OR²/Si ratio falls within a range of 0.8 to 2.6. This is because a ratio greater than 2.6 increases volatility and makes it more likely that the degree of crosslinking will vary, whereas a ratio less than 0.8 reduces compatibility with component (A). The viscosity of component (B) at 25°C should preferably be 1 to 100 mm²/s. Component (B) should be added in an amount of 5 to 100 weight parts, preferably 5 to 20 weight parts because of considerations related to curability, in each case per 100 weight parts of component (A).

The organotitanium-based catalyst (component (C)) facilitates the hydrolysis and condensation of alkoxy groups. Specific examples of such catalysts include tetramethyl titanate, tetraisopropyl titanate, tetrabutyl titanate, tetra(2-ethylhexyl) titanate, titanium tetraacetyl acetonate, and bis(isopropoxy)titanium bis(acetyl acetonate). Component (C) should be added in an amount of 0.1 to 10 weight parts, preferably 0.5 to 5 weight parts because of considerations related to curability, in each case per 100 weight parts of component (A).

The aliphatic hydrocarbon solvent or ester-based solvent (component (D)) is a component that dissolves component (A) or (B) and improves the applicability of the present composition. Specific examples of suitable aliphatic hydrocarbon solvents include hexane, octane, heptane, n-paraffins (such as Normal Paraffin SL, L, and M^{®} from Nippon Petrochemicals), and other linear aliphatic hydrocarbons, and isohexane, isoparaffins (such as Isosol 200 and 300^{®} from Nippon Petrochemicals), and other branched aliphatic hydrocarbons. Specific examples of suitable ester-based solvents include ethyl acetate, butyl acetate, and isobutyl acetate. Component (D) should be added in an amount of 50 to 900 weight parts, preferably 100 to 500 weight parts because of considerations related to the ease of application, in each case per 100 weight parts of component (A).

The alcohol-based solvent (component (E)) is a diluting component designed to improve the dispersibility of component (C) and storage stability of the present composition. Specific examples include methanol, ethanol, isopropanol, butanol, and isobutanol. These alcohol-based solvents may also contain small amounts of moisture. Component (E) should be added in an amount of 0.1 to 100 weight parts, and preferably 0.5 to 50 weight parts, in each case per 100 weight parts of component (A). This is because adding less than 0.1 weight part has an adverse effect on the dispersion stability of component (C), whereas adding more than 100 weight parts has an adverse effect on applicability.

Although the composition of the present invention comprises the above-described components (A) to (E), it is also possible to optionally add coloring pigments, anticorrosive pigments, and other pigments; antimicrobials agents; polyether-modified silicones and other leveling agents; antifouling agents; and the like in an appropriate manner. The following components may also be added in an appropriate manner in order to improve the adhesion of the resulting coating film: 3-aminopropyltrimethoxysilane, 3-aminopropyltriethoxysilane, 3-(2-aminoethyl)aminopropyltrimethoxysilane, 3-(2-aminoethyl)aminopropyltriethoxysilane, 3-(2-aminoethyl)aminopropylmethyldimethoxysilane, 3-(2-aminoethyl)aminopropylmethyldiethoxysilane, and other aminosilane coupling agents; and 3-glycidoxypropyltrimethoxysilane, 3-glycidoxypropylmethyldimethoxysilane, and other epoxysilane coupling agents; as well as 3-mercaptopropyltrimethoxysilane, 3-methacryloxypropyltrimethoxysilane, and the like. It should be noted, however, that the present composition does not contain any alkoxysilanes that have phenyl groups.

The present composition may, for example, be applied by dipping, spraying, or brushing. The coating film may have any thickness, but a thickness of 1 to 500 µm is preferred. Although it is common knowledge that a film with excellent water repellency can be formed by applying a material and heating it, the composition of the present invention is characterized in that fast curing can be achieved even at comparatively low heating temperatures (50 to 100°C). For example, a cured film can be formed in 0.5 to 20 minutes when the material is heated to 100°C, and in 1 to 30 minutes when the material is heated to 80°C. Additional benefits include the fact that the present composition has excellent storage stability and can form a film that exhibits excellent water repellency at a low temperature in a short time even after prolonged standing. The composition is therefore suitable as a water-repellent coating for acrylic resins, ABS resins, polyester nonwovens, leather, synthetic imitation leather, and other organic materials. Glass, iron, aluminum, and stainless steel plates can also be cited as examples of substrates to which the present composition can be applied. Since a cured film commonly has a pencil hardness of 6B or less, the composition of the present invention can be used as a water-repellent agent for forming coatings on materials for which such soft films are required, such as wallpaper, ceiling finishes, flooring materials, cloth, curtains, and other materials for interior use; doors, roofs, seats, and other interior materials of automobile or vehicle; and films, sheets, and other packaging materials.

### Best Mode for Carrying Out the Invention

The present invention will now be described through working and comparative examples. In the working examples, "parts" refers to weight parts, "viscosity" denotes values measured at 25°C, and "Me" refers to methyl group. In addition, the contact angle of the film with water was measured using a contact angle meter (CA-Z^{®} from Kyowa Interface Science), and the pencil hardness was measured by the method defined in JIS K5400.

Synthesis Example. Hydrochloric acid (1/100 N, 115 g) was added in drops while methyltrimethoxysilane (775 g) and methanol (110 g) were stirred. Following the dropwise addition, the system was heated and stirred under reflux for 7 hours. Stripping was then performed at a reduced pressure and the product was cooled and filtered, yielding 490 g of a partial hydrolysate/condensate of methyltrimethoxysilane(B1) with a viscosity of 25 mm²/s. It was determined by ¹³C-NMR analysis that the resulting partial hydrolysate/ondensate had a methoxy residue/Si ratio of 0.9.

Working Example 1. The following components were added to 100 parts of a polydimethylsiloxane fluid that had a viscosity of about 3000 mPa·s and was described by the average molecular formula (MeO)₃SiO(Me₂SiO)₃₀₀Si(OMe)₃: 20 parts of the partial hydrolysate/condensate of methyltrimethoxysilane(B1) obtained as the synthetic example, 390 parts of an isoparaffin solvent (Isosol 300^{®} from Nippon Petrochemicals), 10 parts of isopropyl alcohol, and 3 parts of bis(isopropoxy)titanium bis(acetyl acetonate), yielding a light-yellow transparent silicone composition for coating.

The resulting silicone composition was applied to a polyester nonwoven for wallpaper and heat-treated for 5 minutes in a 100°C oven, yielding a cured film. The contact angle of the film with water was 106° and the pencil hardness thereof was 6B or less. The silicone composition was stored for 3 months at room temperature, and a cured film was formed on the surface of a polyester nonwoven for wallpaper in the same manner. The contact angle of the film with water was measured and it was found that the result was the same as that obtained immediately after preparation. In addition, no change was detected in product appearance.

Working Example 2. The following components were added to 100 parts of a polydimethylsiloxane fluid that had a viscosity of about 3000 mPa·s and was described by the average molecular formula (MeO)₃SiO(Me₂SiO)₃₀₀Si(OMe)₃: 20 parts of a partial hydrolysate/condensate of tetxaethoxysilane(Ethyl Silicate 40^{®} from Tama Chemicals) with a viscosity of 5 mm²/s and an ethoxy residue/Si ratio of 2.2, 390 parts of an isoparaffin solvent (Isosol 300^{®} from Nippon Petrochemicals), 10 parts of isopropyl alcohol, and 3 parts of bis(isopropoxy)titanium bis(acetyl acetonate), yielding a silicone composition for coating.

The resulting silicone composition was applied to a polyester nonwoven for wallpaper and heat-treated for 5minutes in a 100°C oven, yielding a cured film. The contact angle of the film with water was 105° and the pencil hardness thereof was 6B or less.

Comparative Example 1. A silicone composition for coating was prepared in the same manner as in Working Example 2 except that the bis(isopropoxy)titanium bis(acetyl acetonate) (3 parts) used in Working Example 2 was dispensed with.

The resulting silicone composition was applied to a polyester nonwoven for wallpaper and heat-treated for 5 minutes in a 100°C oven, yielding a film. The contact angle of the film with water was measured and it was found that water had penetrated into the polyester nonwoven and that the film had failed to become water repellent.

Working Example 3. The following components were added to 100 parts of a polydimethylsiloxane fluid that had a viscosity of about 3000 mPa·s and was described by the average molecular formula (MeO)₃SiO(Me₂SiO)₃₀₀Si(OMe)₃: 20 parts of a partial hydrolysate/condensate of methyltrimethoxysilane(MS51^{®} from Mitsubishi Chemical) with a viscosity of 5mm²/s and an methoxy residue/Si ratio of 2.5, 390 parts of an isoparaffin solvent (Isosol 300^{®} from Nippon Petrochemicals), 10 parts of isopropyl alcohol, and 3 parts of bis(isopropoxy)titanium bis(acetyl acetonate), yielding a silicone composition for coating.

The resulting silicone composition was applied to a polyester nonwoven for wallpaper and heat-treated for 5minutes in a 100°C oven, yielding a cured film. The contact angle of the film with water was 106° and the pencil hardness thereof was 6B or less.

Working Example 4. The following components were added to 100 parts of a polydimethylsiloxane fluid that had a viscosity of about 3000 mPa·s and was described by the average molecular formula (MeO)₃Si-C₂H₄-(Me₂SiO)₃₀₀(Me₂Si-C₂H₄-Si(OMe)₃: 20 parts of the partial hydrolysate/condensate of methyltrimethoxysilane(B1) obtained as the synthetic example, 390 parts of an isoparaffin solvent (Isosol 200^{®} from Nippon Petrochemicals), 10 parts of isopropyl alcohol, and 3 parts of bis(isopropoxy)titanium bis(acetyl acetonate), yielding a silicone composition for coating.

The resulting silicone composition was applied to a polyester nonwoven for wallpaper and heat-treated for 5 minutes in a 100°C oven, yielding a cured film. The contact angle of the film with water was 106° and the pencil hardness thereof was 6B or less.

Working Example 5. The following components were added to 100 parts of a polydimethylsiloxane fluid that had a viscosity of about 3000 mPa·s and was described by the average molecular formula (MeO)₃SiO(Me₂SiO)₃₀₀Si(OMe)₃: 20 parts of the partial hydrolysate/condensate of methyltrimethoxysilane(B1) obtained as the synthetic example, 390 parts of ethyl acetate, 10 parts of isopropyl alcohol, and 3 parts of bis(isopropoxy)titanium bis(acetyl acetonate), yielding a silicone composition for coating.

The resulting silicone composition was applied to a polyester nonwoven for wallpaper and heat-treated for 10 minutes in a 80°C oven, yielding a cured film. The contact angle of the film with water was 105° and the pencil hardness thereof was 6B or less.

Comparative Example 2. The following components were added to 100 parts of a polydimethylsiloxane fluid that had a viscosity of about 3000 mPa·s and was described by the average molecular formula (MeO)₃SiO(Me₂SiO)₃₀₀Si(OMe)₃: 20 parts of the partial hydrolysate/condensate of methyltrimethoxysilane (B1) obtained as the synthetic example, 400 parts of isopropyl alcohol, and 3 parts of bis(isopropoxy)titanium bis(acetyl acetonate), yielding a silicone composition for coating.

The resulting silicone composition was applied to a polyester nonwoven for wallpaper and heat-treated for 5 minutes in a 100°C oven, yielding a cured film. The contact angle of the film with water was 106°. The silicone composition was stored for 3 months at room temperature, a cured film was formed on the surface of a polyester nonwoven for wallpaper in the same manner and the contact angle of the film with water was measured and found to have decreased to 100°. It was thus demonstrated that the silicone composition had inadequate storage stability. Comparative Example 3. The following components were added to 100 parts of a polydimethylsiloxane fluid that had a viscosity of about 3000 mPa·s and was described by the average molecular formula (MeO)₃SiO(Me₂SiO)₃₀₀Si(OMe)3: 20 parts of the partial hydrolysate/condensate of methyltrimethoxysilane(B1) obtained as the synthetic example, 400 parts of an isoparaffin solvent (Isosol 300^{®} from Nippon Petrochemicals), and 3 parts of bis(isopropoxy)titanium bis(acetyl acetonate), yielding a light-yellow transparent silicone composition for coating.

The silicone composition was stored at room temperature, and cloudiness was observed in two months. It was thus demonstrated that the silicone composition had inadequate storage stability.

Comparative Example 4. The following components were added to 100 parts of a polydimethylsiloxane fluid that had a viscosity of about 3000 mPa·s and was described by the average molecular formula (MeO)₃SiO(Me₂SiO)₃₀₀Si(OMe)₃: 20 parts of the partial hydrolysate/condensate of methyltrimethoxysilane(B1) obtained as the synthetic example, 390 parts of an isoparaffin solvent (Isosol 300^{®} from Nippon Petrochemicals), 10 parts of isopropyl alcohol, and 3 parts of dibutyltin dilaurate, yielding a silicone composition for coating.

The resulting silicone composition was applied to a polyester nonwoven for wallpaper and heat-treated for 5 minutes in a 100°C oven, yielding a cured film. The contact angle of the film with water was measured and found to be 100°, indicating that the film had inadequate water repellency.

### Industrial Applicability

Because the present silicone composition as described above is capable of forming a soft water-repellent film when cured for a short time at a low temperature, it is suitable as a water-repellent coating for acrylic resins, ABS resins, polyester nonwovens, leather, synthetic imitation leather, and other organic materials; and it can be used as a water-repellent agent for forming coatings on materials such as wallpaper, ceiling finishes, flooring materials, cloth, curtains, and other materials for interior use; doors, roofs, seats, and other interior materials of automobile or vehicle; and films, sheets, and other packaging materials.

## Claims

1. A silicone composition for a water-repellent coating comprising
(A) 100 weight parts of a polydimethylsiloxane described by general formula
(RO)₃Si-Q-{(CH₃)₂SiO}ₙ-(CH₃)₂Si-Q-Si(OR)₃,
where R is a C₁ to C₁₀ monovalent hydrocarbon group, Q is an oxygen atom or a C₂ to C₁₀ alkylene group, and n is an integer from 10 to 1000;
(B) 5 to 100 weight parts of a partial hydrolysate/condensate of alkoxysilane, wherein the alkoxysilane has a general formula
R¹ₓSi(OR²)₄₋ₓ,
where R¹ is a C₁ to C₆ monovalent hydrocarbon group, R² is a C₁ to C₆ alkyl group, and x is an integer from 0 to 3;
(C) 0.1 to 10 weight parts of an organotitanium-based catalyst;
(D) 50 to 900 weight parts of an aliphatic hydrocarbon solvent or ester-based solvent; and
(E) 0.1 to 100 weight parts of an alcohol-based solvent.

2. The silicone composition according to Claim 1, where the content of alkoxy groups in component (B), expressed as the OR²/Si ratio, is 0.8 to 2.6.

3. The silicone composition according to either Claim 1 or 2, where R¹ is methyl, R² is selected from methyl and ethyl, and x is 1 or 0.

4. The silicone composition according to either Claim 1 or 2, where n is an integer from 100 to 800.

5. The silicone composition according to either Claim 1 or 2, where component (B) has a viscosity at 25°C of 1 to 100mm²/s.

6. The silicone composition according to either Claim 1 or 2, comprising 5 to 20 weight parts of component (B) per 100 weight parts of component (A).

7. The silicone composition according to either Claim 1 or 2, comprising 100 to 500 weight parts of component (D) per 100 weight parts of component (A).

8. The silicone composition according to either Claim 1 or 2, comprising 0.5 to 50 weight parts of component (E) per 100 weight parts of component (A).

9. A silicone composition for a water-repellant coating comprising
(A) 100 weight parts of a polydimethylsiloxane described by general formula
(RO)₃Si-Q-{(CH₃)₂SiO}ₙ-(CH₃)₂Si-Q-Si(OR)₃,
where R is a C₁ to C₁₀ monovalent hydrocarbon group, Q is an oxygen atom or a C₂ to C₁₀ alkylene group, and n is an integer from 100 to 800;
(B) 5 to 20 weight parts of a partial hydrolysate/condensate of alkoxysilane, wherein the alkoxysilane has a general formula
R¹ₓSi(OR²)₄₋ₓ,
where R¹ is methyl, R² is selected from the group consisting of methyl and ethyl, x is 1 or 0, and the ratio of OR²/Si is 0.8 to 2.6;
(C) 0.1 to 10 weight parts of an organotitanium-based catalyst;
(D) 100 to 500 weight parts of an aliphatic hydrocarbon solvent or ester-based solvent; and
(E) 0.5 to 50 weight parts of an alcohol-based solvent.

10. An organic material coated with the composition of any of Claims 1, 2 or 9.

## Patentansprüche

1. Eine Siliconzusammensetzung für eine wasserabweisende Beschichtung, enthaltend:
(A) 100 Gewichtsteile eines Polydimethylsiloxans, beschrieben durch die allgemeine Formel
(RO)₃Si-Q-{(CH₃)₂SiO}ₙ-(CH₃)₂Si-Q-Si(OR)₃,
worin R eine einbindige C₁- bis C₁₀-Kohlenwasserstoffgruppe ist, Q ein Sauerstoffatom oder eine C₂- bis C₁₀-Alkylengruppe ist und n eine ganze Zahl von 10 bis 1000 ist;
(B) 5 bis 100 Gewichtsteile eines partiellen Hydrolysats/Kondensats eines Alkoxysilans, wobei das Alkoxysilan die allgemeine Formel
R¹ₓSi(OR²)₄₋ₓ
hat, worin R¹ eine einbindige C₁- bis C₆-Kohlenwasserstoffgruppe ist, R² eine C₁- bis C₆-Alkylgruppe ist und x eine ganze Zahl von 0 bis 3 ist;
(C) 0,1 bis 10 Gewichtsteile eines Katalysators auf Organotitan-Basis;
(D) 50 bis 900 Gewichtsteile eines aliphatischen Kohlenwasserstofflösungsmittels oder eines Lösungsmittels auf Esterbasis und
(E) 0,1 bis 100 Gewichtsteile eines Lösungsmittels auf Alkoholbasis.

2. Die Siliconzusammensetzung nach Anspruch 1, wobei der Gehalt an Alkoxygruppen in der Komponente (B), ausgedrückt als das OR²/Si-Verhältnis, 0,8 bis 2,6 ist.

3. Die Siliconzusammensetzung nach Anspruch 1 oder 2, wobei R¹ Methyl ist, R² ausgewählt ist aus Methyl und Ethyl und x gleich 1 oder 0 ist.

4. Die Siliconzusammensetzung nach Anspruch 1 oder 2, wobei n eine ganze Zahl von 100 bis 800 ist.

5. Die Siliconzusammensetzung nach Anspruch 1 oder 2, wobei die Komponente (B) eine Viskosität bei 25°C von 1 bis 100 mm²/s hat.

6. Die Siliconzusammensetzung nach Anspruch 1 oder 2, enthaltend 5 bis 20 Gewichtsteile der Komponente (B) pro 100 Gewichtsteile der Komponente (A).

7. Die Siliconzusammensetzung nach Anspruch 1 oder 2, enthaltend 100 bis 500 Gewichtsteile der Komponente (D) pro 100 Gewichtsteile der Komponente (A).

8. Die Siliconzusammensetzung nach Anspruch 1 oder 2, enthaltend 0,5 bis 50 Gewichtsteile der Komponente (E) pro 100 Gewichtsteile der Komponente (A).

9. Eine Siliconzusammensetzung für eine wasserabweisende Beschichtung, enthaltend:
(A) 100 Gewichtsteile eines Polydimethylsiloxans, beschrieben durch die allgemeine Formel
(RO)₃Si-Q-{(CH₃)₂SiO}ₙ-(CH₃)₂Si-Q-Si(OR)₃,
worin R eine einbindige C₁- bis C₁₀-Kohlenwasserstoffgruppe ist, Q ein Sauerstoffatom oder eine C₂- bis C₁₀-Alkylengruppe ist und n eine ganze Zahl von 100 bis 800 ist;
(B) 5 bis 20 Gewichtsteile eines partiellen Hydrolysats/Kondensats eines Alkoxysilans, wobei das Alkoxysilan die allgemeine Formel hat
R¹ₓSi(OR²)₄₋ₓ
hat, worin R¹ Methyl ist, R² ausgewählt ist aus der Gruppe bestehend aus Methyl und Ethyl, x gleich 1 oder 0 ist und das OR²/Si-Verhältnis 0,8 bis 2,6 ist;
(C) 0,1 bis 10 Gewichtsteile eines Katalysators auf Organotitan-Basis;
(D) 100 bis 500 Gewichtsteile eines aliphatischen Kohlenwasserstofflösungsmittels oder eines Lösungsmittels auf Esterbasis; und
(E) 0,5 bis 50 Gewichtsteile eines Lösungsmittels auf Alkoholbasis.

10. Ein organisches Material, beschichtet mit der Zusammensetzung nach einem der Ansprüche 1, 2 oder 9.

## Revendications

1. Composition de silicone pour un revêtement hydrofuge comprenant :
(A) 100 parties en poids d'un polydiméthylsiloxane décrit par la formule générale
(RO)₃Si-Q-{(CH₃)₂SiO)ₙ-(CH₃)₂Si-Q-Si(OR)₃
dans laquelle R représente un groupe hydrocarboné monovalent en C₁ à C₁₀, Q représente un atome d'oxygène ou un groupe alkylène en C₂ à C₁₀ et n est un nombre entier de 10 à 1000 ;
(B) 5 à 100 parties en poids d'un produit d'hydrolyse/produit de condensation partielle d'un alcoxysilane, l'alcoxysilane répondant à la formule générale
R¹ₓSi(OR²)₄₋ₓ,
dans laquelle R¹ représente un groupe hydrocarboné monovalent en C₁ à C₆, R² représente un groupe alkyle en C₁ à C₆ et x est un nombre entier de 0 à 3 ;
(C) 0,1 à 10 parties en poids d'un catalyseur à base d'organotitane ;
(D) 50 à 900 parties en poids d'un solvant hydrocarboné aliphatique ou d'un solvant à base d'ester ; et
(E) 0,1 à 100 parties en poids d'un solvant à base d'alcool.

2. Composition de silicone selon la revendication 1, dans laquelle la teneur en groupes alcoxy dans le composant (B), exprimée sous la forme du rapport OR²/Si, va de 0,8 à 2,6.

3. Composition de silicone selon la revendication 1 ou 2, dans laquelle R¹ représente un groupe méthyle, R² est choisi parmi un groupe méthyle et un groupe éthyle et x vaut 1 ou 0.

4. Composition de silicone selon la revendication 1 ou 2, dans laquelle n est un nombre entier de 100 à 800.

5. Composition de silicone selon la revendication 1 ou 2, dans laquelle le composant (B) a une viscosité à 25°C valant de 1 à 100 mm²/s.

6. Composition de silicone selon la revendication 1 ou 2, comprenant 5 à 20 parties en poids du composant (B) pour 100 parties en poids du composant (A).

7. Composition de silicone selon la revendication 1 ou 2, comprenant 100 à 500 parties en poids du composant (D) pour 100 parties en poids du composant (A).

8. Composition de silicone selon la revendication 1 ou 2, comprenant 0,5 à 50 parties en poids du composant (E) pour 100 parties en poids du composant (A).

9. Composition de silicone pour un revêtement hydrofuge comprenant :
(A) 100 parties en poids d'un polydiméthylsiloxane décrit par la formule générale
(RO)₃Si-Q-{(CH₃)₂SiO}ₙ-(CH₃)₂Si-Q-Si(OR)₃,
dans laquelle R représente un groupe hydrocarboné monovalent en C₁ à C₁₀, Q représente un atome d'oxygène ou un groupe alkylène en C₂ à C₁₀ et n est un nombre entier de 100 à 800 ;
(B) 5 à 100 parties en poids d'un produit d'hydrolyse/produit de condensation partielle d'un alcoxysilane, l'alcoxysilane répondant à la formule générale
R¹ₓSi(OR²)₄₋ₓ,
dans laquelle R¹ représente un groupe méthyle, R² est choisi dans le groupe constitué par un groupe méthyle et un groupe éthyle, x vaut 1 ou 0 et le rapport OR²/Si va de 0,8 à 2,6 ;
(C) 0,1 à 10 parties en poids d'un catalyseur à base d'organotitane ;
(D) 100 à 500 parties en poids d'un solvant hydrocarboné aliphatique ou d'un solvant à base d'ester ; et
(E) 0,5 à 50 parties en poids d'un solvant à base d'alcool.

10. Matériau organique revêtu par la composition selon l'une quelconque des revendications 1, 2 ou 9.
